# EUROPEAN PATENT APPLICATION

(11) **EP 4 437 825 A1**
(43) Date of publication of application: **02.10.2024**
(21) Application number: 24155379.1
(22) Date of filing: 01.02.2024
(51) Int. Cl.: A01C 7/20, A01C 5/06

(54) **ROW UNIT**

(30) Priority: 27.03.2023 US 202318126659
(71) Applicant: Deere & Company, Moline, IL 61265 (US)
(72) Inventor: HUBNER, CARY S, 68163 Mannheim (DE); DHOBALE, DNYANESH K, 68163 MAnnheim (DE)
(74) Representative: Reichert, Christian

(57) **Abstract**

A row unit (200) for a planter assembly (13) is disclosed. The row unit (200) comprising: a disc opener (204) coupled to a frame (206); and a gauge wheel (202) positioned adjacent to the disc opener (204) and coupled to the frame (206) through a linkage assembly (208); wherein, the linkage assembly (208) is configured to selectively direct the gauge wheel (202) to move along a non-arcuate path of travel (224) between a maximum depth (232) and a minimum depth (234).

## Description

### Field of the Disclosure

The present disclosure relates to a linkage assembly for a gauge wheel, and more particularly to a linkage assembly that allows the gauge wheel to maintain an alignment that improves ground following of a corresponding row unit.

### Background of the Disclosure

Current planter row units use double disk openers with a gauge wheel on a single pivot to set the depth. With current planter units, in uneven terrain the planting depth may change due to the offset between the disk opener blades and the gauge wheels. Because of this offset, while going over undulations, disk opening blades encounter the undulations earlier than gauge wheels. With current planter designs, by the time the gauge wheels encounter undulations and force the row unit to move from contact with the ground, the disc opener blades have already opened some of the trench at a depth that is not consistent with the depth set by the gauge wheel.

### Summary

One embodiment is a row unit for a planter assembly that has a disc opener coupled to a frame and a gauge wheel positioned adjacent to the disc opener and coupled to the frame through a linkage assembly. The linkage assembly selectively directs the gauge wheel to move along a non-arcuate path of travel between a maximum depth and a minimum depth.

In one example of this embodiment, the linkage assembly is a four-bar linkage assembly. In part of this example, the linkage assembly has a first link pivotally coupled to the frame on one end and pivotally coupled to a gauge link on an opposite end and a second link pivotally coupled to the frame on one end and to the gauge link on an opposite end. The gauge wheel is rotationally coupled to an end of the gauge link such that as the gauge link is moved the gauge wheel moves relative to the disc opener along the path of travel. In a different part of this example, the first link is pivotally coupled to the frame on a first side of the gauge link and the second link is pivotally coupled to the frame on a second side of the gauge link. In yet another part of this example, one of the first or second links has a depth stop that corresponds with a depth adjustment contact coupled to the frame to set a furrow depth of the disc opener relative to the gauge wheel.

In another example of this embodiment, the linkage assembly is orientated so the path of travel is aligned with vertical tolerances that extend vertically from either side of a rotation axis of the disc opener.

In one example, the first link and the second link are both positioned on the same side of the gauge link. In a another example, the first link and the second link have different lengths.

One example of this embodiment has a track assembly driven by rotation of the gauge wheel, the track assembly is configured to provide ground contact pressure adjacent to a furrow created by the disc opener. In part of this example, the track assembly has a swing arm coupled to an axis of the gauge wheel, an idler wheel rotationally coupled to a distal end of the swing arm, and a track extending partially around the gauge wheel and the idler wheel. Another embodiment of this disclosure is a method for manufacturing a row unit for a planter assembly. The method includes coupling a disc opener to a frame of the row unit, the disc opener configured to rotate relative to the frame to selectively create a furrow in the underlying ground, positioning a gauge wheel adjacent to the disc opener, the gauge wheel configured to be repositionable relative to the disc opener to selectively alter a furrow depth, and coupling the gauge wheel to the frame through a linkage assembly, the linkage assembly sized to allow the gauge wheel to move along a path of travel relative to the disc opener. The furrow depth is altered by repositioning the gauge wheel along the path of travel relative to the disc opener, the path of travel being non-arcuate.

In one example of this embodiment, the linkage assembly coupling the gauge wheel to the frame comprises a four-bar linkage assembly having a first link and a second link pivotally coupled to a gauge link. Part of this example includes coupling a depth adjustment contact to the frame and aligning the depth adjustment contact to contact a portion of one of the first link or the second link to selectively adjust the furrow depth by limiting movement of the linkage assembly. Another part of this example includes pivotally coupling the first link to the frame on a first side of the gauge link and pivotally coupling the second link to the frame on a second side of the gauge link. An alternative part of this example includes pivotally coupling both the first link and the second link to the frame on a first side of the gauge link.

Another example of this embodiment includes coupling a track assembly to the gauge wheel and linkage assembly, the track assembly configured to provide ground contact pressure adjacent to a furrow created by the disc opener.

Yet another embodiment of this disclosure is a linkage assembly for a gauge wheel. The linkage assembly has a gauge link, a gauge wheel rotationally coupled to the gauge link, a first link pivotally coupled to the gauge link on one end and configured to be pivotally coupled to a frame of a row unit on an opposite end, and a second link pivotally coupled to the gauge link on one end and configured to be pivotally coupled to the frame of the row unit on an opposite end. The first link and second link are oriented to provide a path of travel of the gauge wheel relative to the frame that is non-arcuate.

In one example of this embodiment, the first link and the second link have different lengths. In another example, the first link is configured to be coupled to the frame on a first side of the gauge link and the second link is configured to be coupled to the frame on a second side of the gauge link. Yet another example of this embodiment has a track assembly coupled to the gauge link.

### Brief Description of the Drawings

The above-mentioned aspects of the present disclosure and the manner of obtaining them will become more apparent and the disclosure itself will be better understood by reference to the following description of the embodiments of the disclosure, taken in conjunction with the accompanying drawings, wherein:
Fig. 1 is a schematic side view of a conventional row unit coupled to a planter assembly and work machine;
Fig. 2a is an elevated perspective view of one embodiment of a row unit;
Fig. 2b is a side view of the row unit of Fig. 2a;
Fig. 2c is a detailed elevated perspective view of a depth adjustment assembly of the row unit of Fig. 2a;
Fig. 2d is a detailed partial side view of the row unit of Fig. 2a at a maximum depth;
Fig. 2e is a detailed partial side view of the row unit of Fig. 2a at a minimum depth;
Fig. 3 is another embodiment of the present disclosure wherein a row unit has a track assembly; and
Fig. 4 is a schematic representation of another embodiment of a linkage assembly for a row unit.

Corresponding reference numerals indicate corresponding parts throughout the several views.

### Detailed Description

The embodiments of the present disclosure described below are not exhaustive and do not limit the disclosure to the precise forms in the following detailed description. Rather, the embodiments are chosen and described so that others skilled in the art may appreciate and understand the principles and practices of the present disclosure.

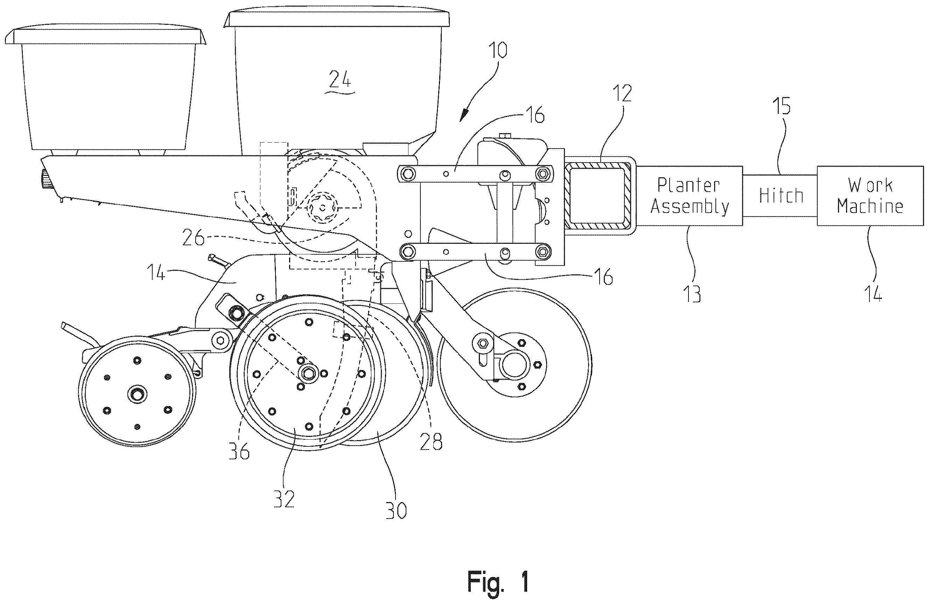

Fig. 1 illustrates a conventional planter row unit 10 mounted to transversely extending tool bar 12 of a planter assembly 13. The planter assembly may have a plurality of row units 10 mounted across the width of the frame 12. Further still, the planter assembly 13 may have multiple frames spaced from one another to provide a spaced configuration having row units 10 positioned across both a forward frame and a rearward frame. The planter assembly 13 may be coupled to a work machine 14 through a hitch 15. The work machine 14 may be any known work machine 14 such as a tractor. The work machine 14 may have a power unit such as a gas, diesel, or electric motor that selectively distributes torques to move one or more wheel or track assembly. The hitch 15 may provide a location to couple the planter assembly 13 to a frame of the work machine 14 so the work machine 14 can selectively pull the planer assembly along the underlying surface. The hitch 15 may have a single or multi-point coupling configuration.

The row unit 10 is provided with a central frame member 14 coupled to the tool bar 12 by a parallelogram linkage 16 to enable vertical relative movement between the row unit and the toolbar 12. Seed is stored in seed hopper 24 and provided to a seed meter 26. The seed meter singulates seed from a seed pool and drops the individual seeds through a seed tube 28 into a planting furrow. The furrow is formed in the soil by a disk furrow opener having at least one disk 30. Gauge wheels 32 control the depth of the furrow and are mounted to the frame member 14 by pivot arms 36. There is a gauge wheel adjacent the outer side of the opener disk 30.

In the embodiment of Fig. 1, the pivot arm 36 is connected from a rotation axis of the gauge wheel 32 directly to the frame 14 to pivot there about. Accordingly, the pivot arm 36 moves along an arcuate path as the depth of the gauge wheel 32 is altered. This arcuate movement causes the gauge wheel 32 to travel at least partially in the fore/aft direction as the depth of the gauge wheel 32 is modified. In other words, as the depth of the gauge wheel 32 is modified, the fore/aft distance between a rotation axis of the gauge wheel 32 and an axis of the opener disk 30 changes. This varying offset distance between the gauge wheel 32 and the opener disk 30 may cause the opener disk 30 to provide an inconsistent depth for the furrow created by the opener disk 30 when the gauge wheel travels over uneven terrain or enters an uphill or downhill terrain change.

While a specific type of conventional row unit 10 having seed hoppers 24 and a seed meter 26 is described herein, the teachings of this disclosure can be applied to any agricultural configuration that uses a gauge wheel positioned adjacent an opener disk 30 or any other furrow-creating member. Accordingly, while specific embodiments of row units are illustrated and discussed herein, the teachings of this disclosure can be applied to any agricultural device using a gauge wheel to set a furrow depth.

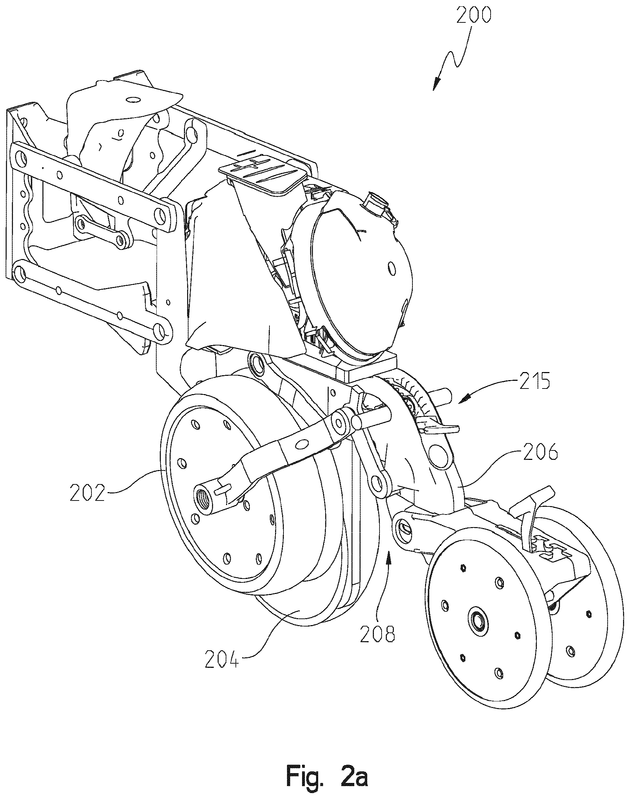

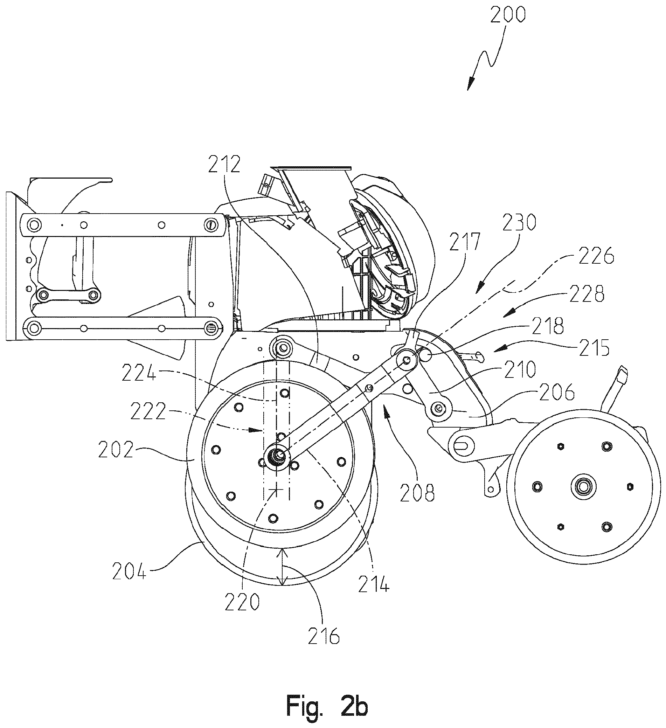

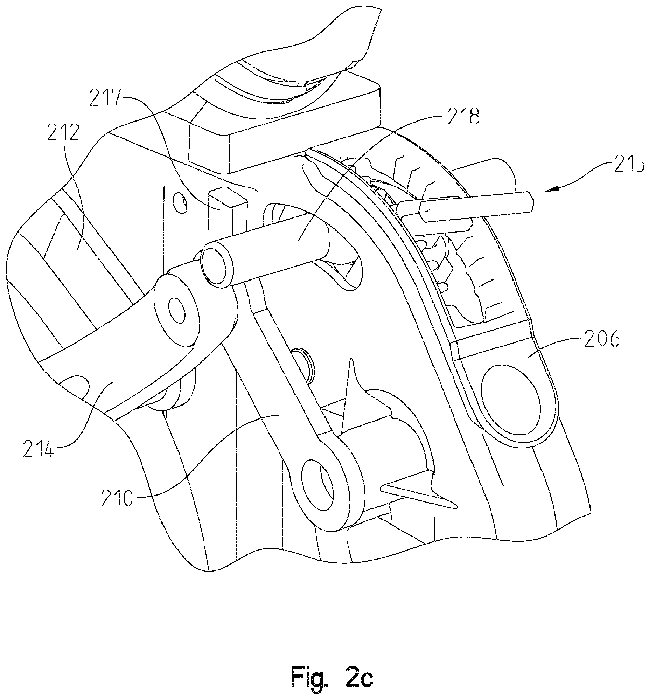

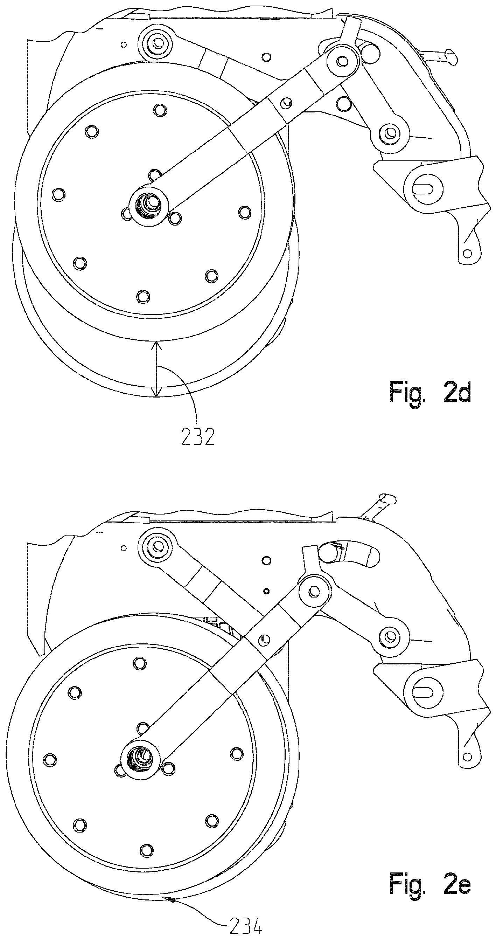

Referring now to Fig. 2, one embodiment of the present disclosure is illustrated. More specifically, Fig. 2 illustrates a row unit 200 having a gauge wheel 202 positioned next to a disk opener 204 and coupled to a frame 206 through a linkage assembly 208. The linkage assembly 208 may have a first link 210 pivotally coupled to the frame 206 on one end and to a gauge link 214 on the opposite end. Similarly, a second link 212 may be pivotally coupled to the frame 206 on one end and pivotally coupled to the gauge link 214 on the other.

The linkage assembly 208 may be coupled to the frame 206 such that a depth adjustment assembly 215 may selectively alter a furrow depth 216 created based on the displacement of the gauge wheel 202 relative to the disk opener 204 along a path of travel 224 within vertical tolerances 222. The depth adjustment assembly 215 may have a depth stop 217 defined from the first link 210 and a depth adjustment contact 218 sized to contact the depth stop 217. The position of the gauge wheel 202 may be altered by manipulating a handle to move the depth adjustment contact 218 and corresponding depth stop 217 to thereby reposition the linkage assembly 208.

In one aspect of this disclosure, as the depth adjustment assembly 215 alters the furrow depth 216 by moving the gauge wheel 202 relative to the disk opener 204 within the vertical tolerances 222, the linkage assembly 208 provides a substantially vertical path of travel for the gauge wheel 202. More specifically, as the gauge wheel 202 moves to alter the furrow depth 216, the linkage assembly 208 maintains the path of travel 224 of a rotation axis of the gauge wheel 202 to ensure the gauge wheel 202 stays within the vertical tolerances 222 as it transitions to provide different furrow depths. The path of travel 224 may be defined by the geometry and relative location of the first and second links 210, 212 relative to the gauge link 214. In one aspect of this disclosure, the linkage assembly 208 may be configured to provide a non-arcuate path of travel 224. The non-arcuate path of travel 224 may be any path of travel that is not defined about a single point. In other words, the non-arcuate path of travel 224 may be any path of travel that is not an arc about a fixed point.

Maintaining a substantially vertical path of travel 224 is achieved, in part, by providing multiple linkages between the frame 206 and the gauge wheel 202. More specifically, the gauge link 214 may be coupled to the gauge wheel 202 on one end, and to the first link 210 at the other end. Further, the second link 212 may be pivotally coupled to the frame 206 on one end and pivotally coupled to the gauge link 214 on the other end. The second link 212 may be pivotally coupled to the gauge link 214 at a location that is between the first end and the second end of the gauge link 214. The geometry of the first link 210 and the second link 212 is such that allows the rotation axis of the gauge wheel 202 to move between a maximum depth 232 and a minimum depth 234 while staying within the vertical tolerances 222. In other words, the linkage assembly provides a path of travel 224 that is non-arcuate and stays within the vertical tolerances 222 as the gauge wheel 202 transitions between the maximum depth 232 and minimum depth 234.

The first link 210 may have a first length that is less than a second length of the second link 212. However, this disclosure contemplates other lengths as well, and in some embodiments the first and second link may have the same length. Further still, in other embodiments the first link may be longer than the second link.

In one aspect of this disclosure, the gauge link 214 defines a link axis 226 having a first side 228 and a second side 230 when viewed from the side perspective of Fig. 2. The first link 210 may extend from the gauge link 214 to the frame 206 on the first side of the link axis 226 while the second link 212 may extend from the gauge link 214 to the frame 206 on the second side 230 of the link axis 226.

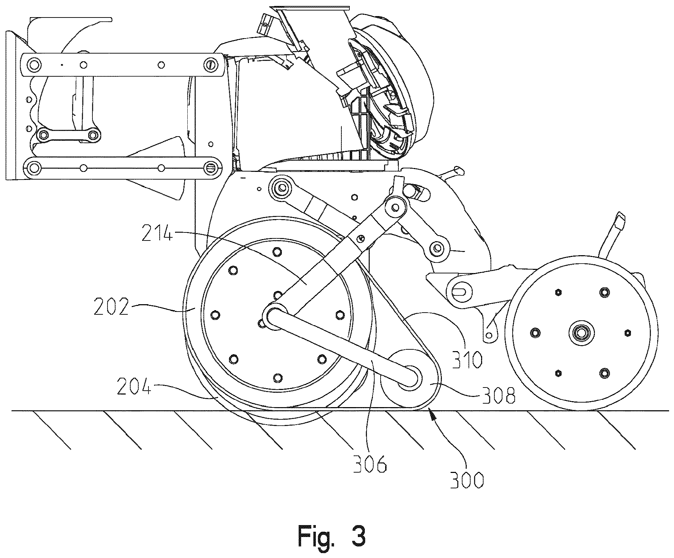

Referring now to Fig. 3, another embodiment of this disclosure is illustrated wherein the gauge wheel 202 has a track assembly 300 coupled thereto. The embodiment of Fig. 3 may have substantially the same components as the row unit 200 of Fig. 2 with the addition of the track assembly 300. The track assembly 300 may have a swing arm 306 pivotally coupled to the gauge link 214 at the rotation axis for the gauge wheel 202. The swing arm 306 may pivot relative to the gauge link 214 about the rotation axis of the gauge wheel 202 or be fixedly mounted thereto. Alternatively, the swing arm 306 may be pivotally coupled to the gauge link 214 at any point between the ends of the gauge link 214. Further, in one embodiment contemplated herein a coil spring may be positioned at the pivot point between the swing arm 306 and the gauge link 214 to provide a springed force on the swing arm 306 towards the underlying surface. Alternatively, a spring may be positioned between the swing arm 306 and the gauge link 214 to provide the springed force to the swing arm 306 towards the underlying surface. In this configuration, an idler wheel 308 and corresponding track 310 may be maintained substantially along the top portion of the underlying surface to provide a ground contact force to the underlying surface adjacent to the furrow.

Regardless, the swing arm 306 may extend away from the rotation axis and provide the idler wheel 308 on a distal end of the swing arm 306. The idler wheel 308 may be configured to rotate freely about an idler wheel axis defined through the swing arm 308. A track 310 may wrap at least partially around both the gauge wheel 202 and the idler wheel 308 to rotate with the gauge wheel 202. The track 310 may have engageable features along an interior surface that correspond with engageable features along the radially outer surfaces of the gauge wheel 202 and the idler wheel 308. The engageable features may ensure the track 310 rotates with the gauge wheel 202 and that the track 310 remains properly centered on the gauge wheel 202 and idler wheel 308.

The track 310 may be sized to be positioned directly adjacent to the disk opener 204 and to contact the underlying surface adjacent to the disk opener 204 in use. This orientation allows the track 310 to provide a scissoring or sheering force to assist with preventing debris from the underlying surface from sticking to the disk opener 204 among other things. Further, by positioning the track adjacent to the furrow created by the disk openers 204, the integrity of the furrow may be maintained during use. More specifically, as the disc openers 204 open the furrow and rotate as the row unit 200 moves in the direction of travel, the disc openers 204 may partially stick to the side walls of the created furrow as they rotate out of the furrow. In this embodiment, the track 310 is positioned adjacent to the newly created furrow and provides stop along the top of the furrow as the disk openers 204 rotate out of the furrow. For example, the track 310 may provide ground contact pressure adjacent to the furrow created by the disc openers 204 to prevent the furrow walls from sticking to the walls of the adjacent disc opener 204 as the disc opener 204 rotates out of the furrow.

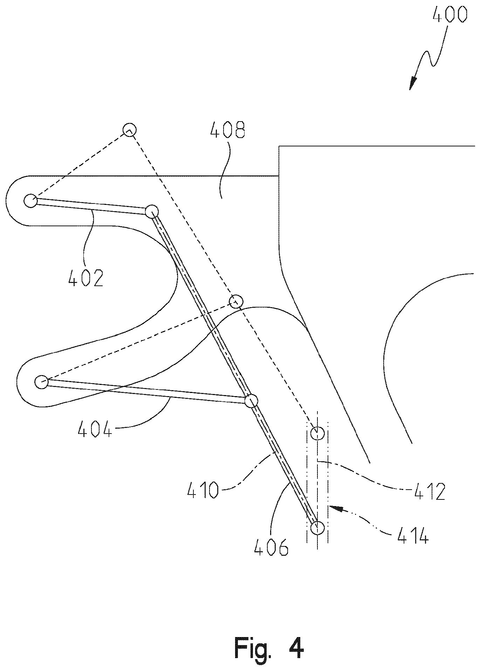

Referring now to Fig. 4, another schematic embodiment 400 of the present disclosure is illustrated. The schematic embodiment 400 may function in substantially the same way as the linkage assembly 208 of the row unit 200, having a first link 402 and a second link 404 pivotally coupling a gauge link 406 to a frame 408 of a row unit. The gauge link 408 may be coupled to a gauge wheel and positioned next to a disk opener 204 as discussed herein. One notable difference between the linkage assembly 208 of row unit 200 and the schematic embodiment 400 is that both the first and second links 402, 404 are positioned on the same side of a link axis 410 of the gauge link 406 from the perspective of Fig. 4.

While the location of the links 402, 404 are different in the schematic embodiment 400, the resulting path of travel 412 of the rotation axis of the gauge wheel may be substantially the same as the path of travel 224 discussed herein for the row unit 200. In other words, the pivot locations and lengths of the first and second links 402, 404 provide for a path of travel 412 that stays within vertical tolerances 414 and provides a non-arcuate path of travel 412.

In use, the teachings of the present disclosure provide an adjustable gauge wheel 202 that is substantially centered with the adjacent disk opener 204. The gauge wheel 202 is adjustable in a substantially vertical, non-arcuate path of travel such that the gauge wheel 202 stays substantially centered with the disk opener 204 in any position from the maximum depth 232 to the minimum depth 234. The substantially centered positioning of the gauge wheel 202 relative to the disk opener 204 provides for more consistent furrow depths 216 when the row unit 200 overpasses uneven underlying surfaces compared to row units that have a gauge wheel offset from the disk opener. More specifically, in the row unit 200 the gauge wheel 202 and the disk opener 204 substantially simultaneously encounter undulations in the underlying ground.

While this disclosure has been described with respect to at least one embodiment, the present disclosure can be further modified within the spirit and scope of this disclosure. This application is therefore intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A row unit (200) for a planter assembly (13), comprising:
a disc opener (204) coupled to a frame (206); and
a gauge wheel (202) positioned adjacent to the disc opener (204) and coupled to the frame (206) through a linkage assembly (208);
wherein, the linkage assembly (208) is configured to selectively direct the gauge wheel (202) to move along a non-arcuate path of travel (224) between a maximum depth (232) and a minimum depth (234).

2. The row unit (200) of claim 1, further wherein the linkage assembly (208) comprises a four-bar linkage assembly.

3. The row unit (200) of claim 1, further wherein the linkage assembly (208) comprises:
a first link (210) pivotally coupled to the frame (206) on one end and pivotally coupled to a gauge link (214) on an opposite end; and
a second link (212) pivotally coupled to the frame (206) on one end and to the gauge link (214) on an opposite end;
wherein, the gauge wheel (202) is rotationally coupled to an end of the gauge link (214) such that as the gauge link (214) is moved the gauge wheel (202) moves relative to the disc opener (204) along the path of travel (224).

4. The row unit (200) of claim 3, wherein the first link (210) is pivotally coupled to the frame (206) on a first side of the gauge link (214) and the second link (212) is pivotally coupled to the frame (206) on a second side of the gauge link (214).

5. The row unit (200) of claim 3 or 4, wherein one of the first or second links (210, 212) has a depth stop (217) that corresponds with a depth adjustment contact (218) coupled to the frame (206) to set a furrow depth (216) of the disc opener (204) relative to the gauge wheel (202).

6. The row unit (200) of one of the claims 1 to 5, wherein the linkage assembly (208) is configured to be orientated so the path of travel (224) is aligned with vertical tolerances that extend vertically from either side of a rotation axis of the disc opener (204).

7. The row unit (200) of claim 3, wherein the first link (210) and the second link (212) are both positioned on the same side of the gauge link (214).

8. The row unit (200) of one of the claims 3 to 7, wherein the first link (210) and the second link (212) have different lengths.

9. The row unit (200) of one of the claims 1 to 8, further comprising a track assembly (300) driven by rotation of the gauge wheel (202), the track assembly (300) configured to provide ground contact pressure adjacent to a furrow created by the disc opener (204).

10. The row unit (200) of one claim 9, wherein the track assembly (300) comprises:
a swing arm (306) coupled to an axis of the gauge wheel (202);
an idler wheel (308) rotationally coupled to a distal end of the swing arm (306); and
a track (310) extending partially around the gauge wheel (202) and the idler wheel (308).
